# FASCICULE DE BREVET EUROPEEN

(11) **EP 0 675 653 B1**
(45) Date de publication et mention de la délivrance du brevet: **22.12.1999**
(21) Numéro de dépôt: 95410021.0
(22) Date de dépôt: 24.03.1995
(51) Int. Cl.: H04N 7/30, H03M 7/30

(54) **Circuit de quantification**
Quantizierungsschaltung
Quantization circuit

(30) Priorité: 30.03.1994 FR 9404145
(43) Date de publication de la demande: 04.10.1995
(73) Titulaire: STMicroelectronics S.A., 94250 Gentilly (FR)
(72) Inventeur: Bolton, Martin, F-38210 Tullins (FR)
(74) Mandataire: de Beaumont, Michel

(56) Documents cités:
- EP-A- 0 380 081
- EP-A- 0 500 077
- EP-A- 0 514 663
- GB-A- 2 125 255
- US-A- 4 386 237
- US-A- 5 150 208
- US-A- 5 184 229
- IEEE TRANSACTIONS ON CIRCUITS AND SYSTEMS FOR VIDEO TECHNOLOGY, vol. 1, NEW YORK US, page 374 C.A.GONZALES ET AL. 'Motion Video Adaptive Quantization in the Transform Domain'
- R.PLOMPEN 'Motion Video Coding for Visual Telephony' 1989 , PTT RESEARCH NEHER LABORATORIES , NL; * Section 7.10, pages 220-223 *
- IEEE TRANSACTIONS ON CIRCUITS AND SYSTEMS FOR VIDEO TECHNOLOGY, vol. 2, NEW YORK US, page 111 P.A.RUETZ ET AL. 'A High-Performance Full-Motion Video Compression Chip Set'

## Description

La présente invention concerne les circuits de compression d'images mobiles selon les normes H261 et MPEG, et plus particulièrement un circuit de quantification utilisé dans un tel circuit de compression.

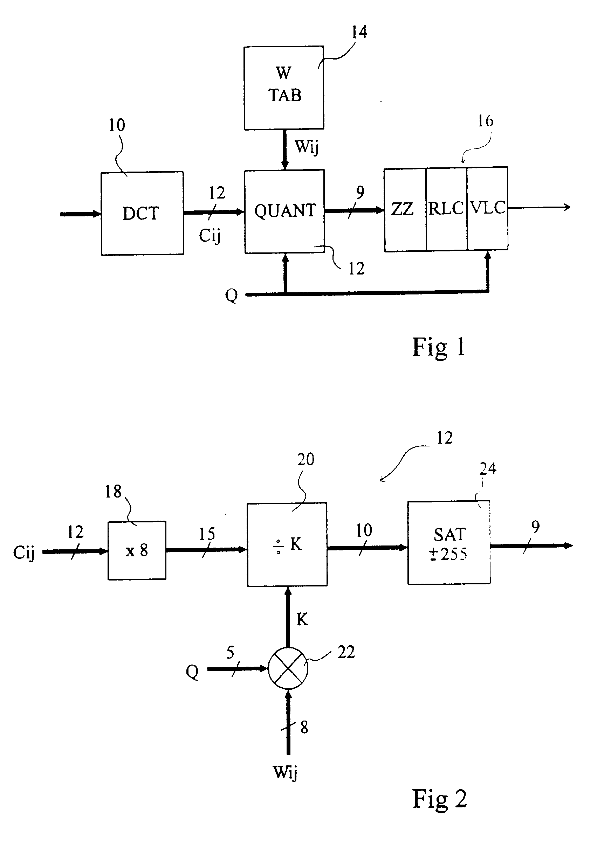

La figure 1 représente partiellement une chaîne de traitement d'un circuit de compression selon les normes H261 et MPEG. Cette chaîne comprend un circuit de transformée cosinus discrète (DCT) 10 qui reçoit des données correspondant à des carrés d'image, généralement de 16x16 pixels, à comprimer. Les pixels d'un carré d'image sont généralement rangés en ce que l'on appelle des macroblocs. Chaque macrobloc comprend quatre blocs de luminance de 8x8 pixels et deux ou quatre blocs de chrominance de 8x8 pixels. Le circuit DCT traite chacun des blocs de 8x8 pixels et fournit une matrice 8x8 correspondante de coefficients signés Cij. Les coefficients Cij sont des mots de douze bits.

La sortie du circuit DCT 10 est fournie à un circuit de quantification 12 qui, essentiellement, multiplie chaque coefficient Cij par huit (effectue un décalage à gauche de trois bits) et le divise par un coefficient de quantification Q et par un coefficient de pondération Wij. Le coefficient de quantification Q, utilisé dans les normes H261 et MPEG, peut varier d'un macrobloc à l'autre et son choix est laissé libre au concepteur du circuit de compression. Les coefficients de pondération Wij, utilisés dans les normes MPEG seulement, diffèrent pour chaque coefficient Cij d'un bloc et sont fournis par une table 14 qui est utilisée pour chaque bloc d'une même image. Les normes MPEG préconisent deux tables affectées, l'une aux images dites de type "intra", et l'autre aux images de type non-intra.

Le rôle du circuit de quantification 12 est d'annuler les coefficients Cij de faible valeur. Les coefficients Cij traités par le circuit de quantification 12 sont fournis sur neuf bits (normes MPEG) ou huit bits (norme H261) à un circuit 16 effectuant un balayage zigzag ZZ, un codage de chaînes de zéros RLC et un codage à longueur variable VLC. Les coefficients de quantification Q, qui doivent être connus au moment du décodage des macroblocs correspondants, sont insérés, au niveau du codage VLC, dans des en-têtes précédant les macroblocs comprimés.

La figure 2 représente un exemple de structure de circuit de quantification 12 classique. En 18, les coefficients Cij sont décalés à gauche de trois bits (multipliés par 8) avant d'être fournis par mots de quinze bits à un diviseur 20. Le facteur de division K du diviseur 20 est fourni par un multiplieur 22 qui reçoit le coefficient de quantification Q, de cinq bits, et le coefficient de pondération Wij, de huit bits. La valeur minimale des coefficients Q et Wij est 1, d'où il résulte que le résultat de la division par K est en théorie de quinze bits. En pratique, il s'avère que dix bits suffisent.

Comme on l'a précédemment indiqué, la sortie du circuit de quantification 12 est de neuf ou huit bits. Le diviseur 20 risque de fournir un résultat de dix bits significatifs si les coefficients Q et Wij sont faibles. Pour pouvoir exploiter la sortie du diviseur sur neuf ou huit bits, on prévoit à la sortie du diviseur 20 un circuit de saturation 24 limitant la sortie du diviseur 20 à +/-255 ou +/-127 si le dixième bit du diviseur devient significatif.

La saturation n'entraîne pas de défaut visible à l'écran si elle se produit brièvement de temps à autre. Ceci est généralement le cas lorsque le coefficient de quantification Q est bien choisi. Toutefois, le coefficient de quantification Q est choisi à l'avance, dans le meilleur des cas pour chaque macrobloc, et ce choix ne tient pas compte du fait que certains des coefficients à traiter Cij pourraient être saturés. Dans ce cas, on peut rencontrer des situations où l'on a de temps en temps une saturation régulière qui entraîne des défauts visibles sur l'écran.

Le document IEEE TRANSACTIONS ON CIRCUITS AND SYSTEMS FOR VIDEO TECHNOLOGY, Vol.1, NEW YORK US, page 374 C.A.GONZALES ET AL. décrit notamment un circuit de quantification dans lequel le coefficient de quantification Q est remplacé par une valeur calculée inférieure lorsque le coefficient est trop fort, afin de limiter l'effet de quantification sur des coefficients faibles (macroblocs présentant une faible activité).

Un objet de la présente invention est de prévoir un circuit de quantification qui présente une faible probabilité de saturation des coefficients traités.

Pour atteindre cet objet, la présente invention prévoit de vérifier si une saturation est susceptible de se produire avec le coefficient de quantification fourni et, si c'est le cas, d'utiliser un autre coefficient de quantification suffisamment élevé pour qu'il n'y ait pas de saturation.

L'invention concerne plus particulièrement un circuit de quantification prévu pour diviser chaque mot numérique d'une suite de séquences par un coefficient de quantification variable d'une séquence à une autre, comprenant un circuit de retard d'une séquence recevant les mots à diviser ; un diviseur recevant la sortie du circuit de retard ; un circuit pour fournir, à chaque séquence, la valeur maximale du rapport entre chacun des mots et une valeur limite que peut fournir le circuit de quantification ; et un circuit pour fournir au diviseur un facteur de division égal à la plus grande valeur parmi celle du coefficient de quantification et la valeur maximale du rapport.

Selon un mode de réalisation de la présente invention, les mots à diviser sont fournis par un circuit de multiplication par une constante et de division par un coefficient de pondération variable.

Selon un mode de réalisation de la présente invention, le circuit de quantification comprend un circuit pour fournir la valeur maximale des mots à chaque sous-séquence prédéterminée d'une séquence et un circuit pour indiquer qu'une sous-séquence contient seulement des mots nuls si la valeur maximale des mots est inférieur au facteur de division fourni au diviseur.

Selon un mode de réalisation de la présente invention, le circuit pour fournir la valeur maximale du rapport comprend un circuit de saturation pour limiter la valeur maximale du rapport à la valeur maximale d'un coefficient de quantification.

Selon un mode de réalisation de la présente invention, les sous-séquences sont des blocs de luminance et de chrominance d'une image et les séquenoes sont des macroblocs regroupant des blocs de luminance et de chrominance correspondant à des carrés d'image.

Ces objets, caractéristiques et avantages ainsi que d'autres de la présente invention sont exposés en détail dans la description suivante de modes de réalisation particuliers faite à titre non-limitatif à l'aide des figures jointes parmi lesquelles :
la figure 1, précédemment décrite, représente partiellement une chaîne de traitement de compression d'image selon les normes H261 et MPEG ;
la figure 2, précédemment décrite, représente une structure de circuit de quantification classique ; et
la figure 3 représente un mode de réalisation de circuit de quantification selon la présente invention.

La présente invention propose un circuit de quantification dans lequel on mémorise les coefficients d'un macrobloc avant de les diviser par un coefficient de quantification donné. Tandis que les coefficients sont mémorisés, on vérifie s'ils risquent ou non d'être saturés lorsqu'ils seront divisés par le coefficient de quantification donné. Si au moins un des coefficients risque d'être saturé, les coefficients mémorisés sont divisés par un coefficient de quantification réajusté.

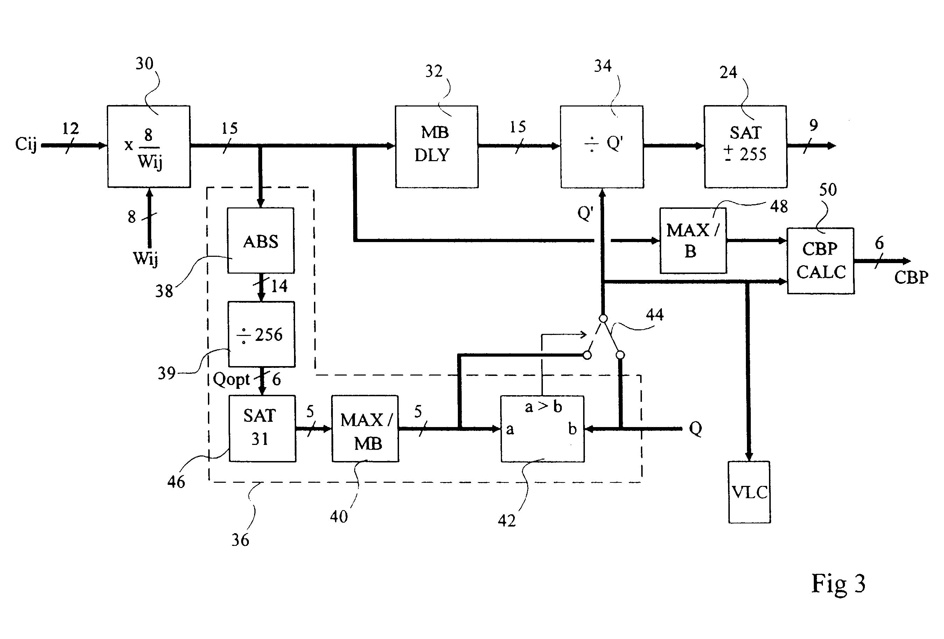

A la figure 3, l'opération consistant à multiplier les coefficients Cij fournis par le circuit DCT 10 par huit et de les diviser par le coefficient de pondération Wij et par le coefficient de quantification Q est scindée. Dans un circuit 30, les coefficients Cij sont multipliés par huit et divisés par les coefficients de pondération Wij (pour les normes MPEG). Pour la norme H261, le circuit 30 n'effectue qu'une multiplication par huit.

Dans un circuit de retard 32 (une mémoire), les valeurs fournies par le circuit 30 sont retardées d'un macrobloc avant d'arriver à un diviseur 34 dont la sortie constitue la sortie du circuit de quantification. Le facteur de division Q' du diviseur 34 est, soit le coefficient de quantification Q, ou bien un coefficient supérieur si l'on a détecté un risque de saturation.

Un risque de saturation est détecté à l'aide d'un circuit 36. Dans ce circuit 36, un module 38 de calcul de valeur absolue reçoit la sortie du circuit 30 (les coefficients Cij fournis par le circuit DCT sont des nombres signés). La valeur absolue fournie par le circuit 38, de quatorze bits, est décalée à droite de huit bits en 39, ce qui équivaut à une division par 256. Ce nombre 256 correspond à la valeur signée maximale que l'on peut fournir sur les neuf bits de sortie du circuit de quantification. Le résultat, de six bits, de cette division est la valeur optimale Qopt du coefficient de quantification, c'est-à-dire la valeur minimale du coefficient de quantification pour que le coefficient Cij concerné ne soit pas saturé à sa sortie du circuit de quantification. Chacune de ces valeurs optimales est fournie à un module 40 qui mémorise, pour chaque macrobloc, la plus grande des valeurs optimales.

Quand le dernier coefficient d'un macrobloc est stocké dans le circuit de retard 32, le module 40 a mémorisé la plus grande des valeurs optimales. Si cette plus grande valeur optimale est supérieure au coefficient de quantification Q, il est certain qu'au moins un coefficient du macrobloc stocké sera saturé. Pour éviter cela, un comparateur 42 compare le coefficient de quantification Q à la valeur optimale mémorisée par le module 40 et commande un commutateur 44 de manière à fournir, en tant que facteur de division au diviseur 34, le coefficient de quantification Q si la plus grande valeur optimale est inférieure au coefficient de quantification, ou bien cette plus grande valeur optimale dans le cas contraire. Ce facteur de division est alors appliqué par le diviseur 34 à tous les coefficients du macrobloc qui vient d'être stocké dans le circuit de retard 32. Pour cela, par exemple, la sortie du comparateur 42 est verrouillée à chaque macrobloc par un signal de synchronisation de macrobloc présent dans tout circuit de compression.

Ainsi, en principe, le coefficient de quantification utilisé Q' est toujours supérieur ou égal à une valeur minimale de limite de saturation. Toutefois, les coefficients optimaux Qopt sont des coefficients de six bits alors que les coefficients de quantification sont de cinq bits (ils ont une valeur maximale de 31). Ainsi, il est prévu à l'entrée du module de mémorisation de la valeur maximale 40 un circuit de saturation 46 pour limiter les coefficients optimaux Qopt à la valeur maximale 31. Si ce circuit 46 entre en action, le diviseur 34 fournira au moins un résultat sur dix bits. En conséquence, on prévoit toujours le circuit de saturation 24 à la sortie du diviseur 34.

Le circuit de quantification de la figure 3 sature seulement dans les cas très peu fréquents où le coefficient de quantification maximal (31) n'est pas suffisamment grand.

Comme on l'a précédemment indiqué, les coefficients de quantification utilisés à chaque macrobloc sont insérés dans des en-têtes au niveau du codage à longueur variable VLC. Avec un circuit de quantification selon l'invention, ce n'est pas le coefficient de quantification initial Q qui est fourni au circuit VLC mais, comme cela est représenté, le coefficient de quantification Q' effectivement utilisé.

L'insertion d'un retard de macrobloc 32 dans le traitement des données à comprimer n'est pas un inconvénient car un tel retard est de toute façon nécessaire. En effet, un en-tête précédant un macrobloc contient un paramètre de motif de macrobloc CBP qui marque les blocs nuls du macrobloc. Dans l'exemple d'un macrobloc comprenant quatre blocs de luminance et deux blocs de chrominance, ce paramètre CBP comprend six bits dont chacun est associé à l'un des six blocs du macrobloc et indique que le bloc respectif est nul ou non. Pour calculer ce paramètre, on introduit un retard d'un macrobloc pour que l'on puisse à la fois vérifier chacun des coefficients du macrobloc et transmettre le paramètre CBP dans l'en-tête précédant les données comprimées du macrobloc.

Le circuit de retard 32 est avantageusement utilisé pour calculer le paramètre CBP. Pour cela, les coefficients fournis au circuit de retard 32 sont fournis à un module 48 qui mémorise la plus grande valeur pour chaque bloc. Un circuit de calcul 50 reçoit du module 48 le coefficient maximal de chaque bloc ainsi que le coefficient de quantification effectif Q'. Chaque valeur maximale fournie par le module 48 est comparée par l'unité de calcul 50 au coefficient de quantification Q'. Si la valeur maximale est inférieure au coefficient de quantification Q', le bit correspondant du paramètre CBP est mis à zéro pour indiquer que le bloc correspondant est nul (en effet, la division en 34 d'un coefficient par un coefficient Q' qui lui est supérieur donne un résultat nul). Dans le cas contraire, le bit du paramètre CBP est mis à 1 pour indiquer que le bloc correspondant n'est pas nul.

La réalisation des divers circuits et modules décrits est à la portée de l'homme du métier. Par exemple, un module de mémorisation d'une valeur maximale comprend un registre et un comparateur. Le comparateur reçoit le contenu du registre et des données entrantes. Si une donnée entrante est supérieure au contenu du registre, la donnée entrante est stockée dans le registre. Le registre est remis à zéro périodiquement par un signal de synchronisation de blocs ou de macroblocs présent dans tout circuit de compression.

## Revendications

1. Circuit de quantification prévu pour diviser chaque mot numérique d'une suite de séquences par un coefficient de quantification (Q) variable d'une séquence à une autre, caractérisé en ce qu'il comprend :
- un circuit (32) de retard d'une séquence recevant les mots à diviser ;
- un diviseur (34) recevant la sortie du circuit de retard ;
- un circuit (38, 39, 40) pour fournir, à chaque séquence, la valeur maximale du rapport entre chacun des mots et une valeur limite (256) que peut fournir le circuit de quantification ; et
- un circuit (42, 44) pour fournir au diviseur (34) un facteur de division (Q') égal à la plus grande valeur parmi la valeur du coefficient de quantification et la valeur maximale du rapport.

2. Circuit de quantification selon la revendication 1, caractérisé en ce que les mots à diviser sont fournis par un circuit (30) de multiplication par une constante (8) et de division par un coefficient de pondération variable (Wij).

3. Circuit de quantification selon la revendication 1, caractérisé en ce qu'il comprend :
- un circuit (48) pour fournir la valeur maximale des mots à chaque sous-séquence prédéterminée d'une séquence ;
- un circuit (50) pour indiquer qu'une sous-séquence contient seulement des mots nuls si la valeur maximale des mots est inférieur au facteur de division (Q') fourni au diviseur.

4. Circuit de quantification selon la revendication 1, caractérisé en ce que le circuit pour fournir la valeur maximale du rapport (38, 39, 40) comprend un circuit de saturation (46) pour limiter la valeur maximale du rapport à la valeur maximale (31) d'un coefficient de quantification.

5. Circuit de quantification selon la revendication 3, caractérisé en ce que les sous-séquences sont des blocs de luminance et de chrominanoe d'une image et en ce que les séquenoes sont des macroblocs regroupant des blocs de luminance et de chrominanoe correspondant à des carrés d'image.

## Patentansprüche

1. Quantisierungsschaltung zur Division jeweils jedes digitalen Datenworts einer Folge von Sequenzen durch einen von einer Sequenz zu einer anderen variablen Quantisierungskoeffizienten (Q), **dadurch gekennzeichnet**, daß die Schaltung umfaßt:
- eine Verzögerungsschaltung (32), welche die ihr zugeführten zu dividierenden Worte um eine Sequenz verzögert;
- eine Dividiervorrichtung (34), welcher die Ausgangsgröße der Verzögerungsschaltung zugeführt wird;
- eine Schaltung (38, 39, 40), welche jeweils für jede Sequenz den Maximalwert des Verhältnisses zwischen jeweils jedem der Datenwörter und einem Grenzwert (256), welchen die Quantisierungsschaltung liefern kann, feststellt;
- eine Schaltung (42, 44), welche der Divisionsvorrichtung (34) einen Quantisierungsfaktor (Q') zuführt, der gleich dem jeweils größeren Wert von dem Wert des Quantisierungskoeffizienten und dem Maximalwert des Verhältnisses ist;.

2. Quantisierungsschaltung nach Anspruch 1, dadurch gekennzeichnet, daß die zu dividierenden Datenwörter von einer Schaltung (30) geliefert werden, die jeweils eine Multiplikation mit einer Konstanten (8) und eine Division durch einen variablen Gewichtungskoeffizienten (Wij) ausführt.

3. Quantisierungsschaltung nach Anspruch 1, dadurch gekennzeichnet, daß die Schaltung umfaßt:
- eine Schaltung (48), welche jeweils für jede vorbestimmte Untersequenz einer Sequenz den Maximalwert der Datenwörter ermittelt;
- eine Schaltung (50) zur Anzeige, daß eine Untersequenz nur Nullen-Wörter enthält, wenn der Maximalbetrag der Wörter kleiner als der der Divisionsvorrichtung zugeführte Divisionsfaktor (Q') ist.

4. Quantisierungsschaltung nach Anspruch 1, dadurch gekennzeichnet, daß die Schaltung (38, 39, 40) zur Ermittlung des Maximalwerts des Verhältnisses eine Sättigungsschaltung (46) zur Begrenzung des Verhältnismaximalwerts auf den Maximalwert (31) eines Quantisierungskoeffizienten aufweist.

5. Quantisierungsschaltung nach Anspruch 3, dadurch gekennzeichnet, daß die Untersequenzen Luminanz-(bzw. Helligkeitswert-) und Chrominanz-(bzw. Farbwert)blöcke eines Bildes sind, und daß die Sequenzen Makroblöcke sind, in welchen die Bildvierecken bzw. -quadraten entsprechenden Luminanz- und Chrominanzblöcke gruppiert sind.

## Claims

1. A quantizer for dividing each digital word of a series of sequences by a quantification coefficient (Q) varying from one sequence to the other, characterized in that it comprises:
- a delay circuit (32) for delaying by one sequence the words to be divided;
- a divider (34) receiving the output of the delay circuit;
- a circuit (38, 39, 40) for providing, at each sequence, the maximum value of the ration between each word and a limit value (256) that can be provided by the quantizer; and
- a circuit (42, 44) for providing to the divider (34) a division coefficient (Q') equal to the greater of the quantification coefficient or the maximum value of the ratio.

2. The quantizer of claim 1, wherein the words to be divided are provided by a circuit (30) for multiplying by a constant value (8) and for dividing by a variable weighing coefficient (Wij).

3. The quantizer of claim 1, including:
- a circuit (48) for providing the maximum value of the words at each predetermined sub-sequence of a sequence;
- a circuit (50) for indicating that a sub-sequence includes only null words if the maximum value of the words is lower than the dividing coefficient (Q') provided to the divider.

4. The quantizer of claim 1, wherein the circuit, for providing the maximum value of the ratio (38, 39, 40), includes a saturation circuit (46) to limit the maximum value of the ratio to the maximum value (31) of a quantification coefficient.

5. The quantizer of claim 3, wherein the subsequences are luminance and chrominance blocks of a picture and wherein the sequences are macroblocks grouping luminance and chrominance blocks corresponding to picture squares.
